Europäisches Patentamt

European Patent Office

Office européen des brevets

(19)

(11) EP 0 425 278 B1

(12) **EUROPEAN PATENT SPECIFICATION**

(45) Date of publication and mention
of the grant of the patent:
**21.08.1996 Bulletin 1996/34**

(51) Int Cl.6: **G11B 7/00**

(21) Application number: **90311677.0**

(22) Date of filing: **24.10.1990**

(54) **Optical record reproducing method and apparatus utilizing stimulated photon echo**

Methode zur Wiedergabe von einem optischen Aufzeichnungsträger und Vorrichtung, die stimulierte Photonenechos verwenden

Méthode pour la reproduction d'un support d'enregistrement d'informations optique utilisant l'écho photonique stimulé

(84) Designated Contracting States:
DE FR GB

(30) Priority: **24.10.1989 JP 276395/89**
**26.10.1989 JP 279559/89**
**11.12.1989 JP 318905/89**

(43) Date of publication of application:
**02.05.1991 Bulletin 1991/18**

(73) Proprietor: **NIKON CORPORATION**
**Tokyo (JP)**

(72) Inventors:
• **Uchikawa, Kiyoshi**
**Tokyo (JP)**
• **Ohsawa, Hisao**
**Yachiyo-shi, Chiba-ken (JP)**

• **Saikan, Seishiro**
**Toyonaka-shi, Osaka (JP)**

(74) Representative: **Burke, Steven David et al**
**R.G.C. Jenkins & Co.**
**26 Caxton Street**
**London SW1H 0RJ (GB)**

(56) References cited:
**GB-A- 2 198 546          US-A- 4 288 861**
**US-A- 4 459 682**

• **OPTICS LETTERS, vol. 14, no. 16, 15th August 1989, pages 841-843, Washington, DC, US; S. SAIKAN et al.: "Optical memory based on heterodyne-detected accumulated photon echoes"**

## Description

BACKGROUND OF THE INVENTION

Field of the Invention

This invention relates to an optical record reproducing method and apparatus utilizing stimulated photon echo. More particularly, the invention utilizes a recording medium which allows a Hole Burning memory persistently or transiently.

Related Background Art

An optical recording method which permits writing at random is generally achieved by illuminating narrowly restricted laser light spot to a disk-like optical recording medium in response to binary-coded information to be recorded while spatially modulating the light intensity, thereby generating binary bits onto a recording layer.

In the above case, because the bits generated on the recording layer are two-dimensional, a narrower light spot must be made to allow higher recording density, and thus optical diffraction limits determine a recording density.

Problems using much greater dimensions have been made to break through such second dimensional writing limits. Above all, methods utilizing the wavelength dimension of a writing light have been extensively researched. The methods are generally referred to as a Hole Burning memory. Of these, one whose memory is not transient (information is not lost in relatively short time) but persistent is specifically called Persistent Spectral Hole Burning or Photochemical Hole Burning or PHB or PSHB in short.

The record reproducing methods using a recording medium which permits use of the Hole Burning memory includes the following two methods:

(1) Method utilizing the wavelength dimension of a writing light (method according to a frequency domain memory)
(2) Method according to a time domain memory

In a record reproducing method (1) according to the frequency domain memory, a narrow banded variable wavelength laser is used as writing and reading lights to write and record a wavelength-controlled hole (a peak where transmissivity increases in the manner of selecting the wavelength by light illumination) in zero phonon absorption band inhomogeneously spread on a recording medium.

In the method (2) according to a time domain memory, by employing pulse lights as reading and writing lights, basically a phenomenon called a stimulated photon echo is utilized to record the time correlation of the two pulse lights. At this stage, an uniquely shaped hole is recorded corresponding to the time correlation of the pulses in a wavelength space of the recording medium.

The conventional method of the time domain memory is herein described further in detail and some of its problems are classified.

As is well known, a photo-excited state of a substance is expressed by an equation of motion of its density matrix (Liouville equation). For the sake of convenience, the relaxation time of density matrix diagonal element is called T1 time (longitudinal relaxation time) as distinguished from the relaxation time of density matrix non-diagonal element is called T2 time (transverse relaxation time). A longitudinal relaxation is considered to mean a process of relaxing the time excited state with an energy release and a transverse relaxation is regarded as a process to disturb the coherence of the electrical polarization in the substance brought on by an incidence light.

The photon echo phenomenon is considered to be a type of third-order non-linear optical effect. The stimulated photon echo in the phenomenon will be described.

When the case where a substance is assumed to be excited by a proper pulse light in an energy resonance manner, the pulse light of E1 is first incident on time t1 and the pulse light of E2 is incident on time t2. When a third pulse light E3 is incident on time t3, a light is then in return reflected from a substance on time (t3 + t2 - t1). This is a photon echo light. If the Liouville equation is calculated under the rotating wave approximation, a three dimensional non-linear polarization, that is an echo is then obtained. The electric field of a photon echo is obtained in the following equation (1).

$$P(t) \propto i \int_0^\infty d\tau \int_0^\infty d\tau' \int_0^\infty d\tau'' \exp \left[ -\frac{\tau'}{T_1} - \frac{(\tau + \tau'')}{T_2} \right]$$

$$\times \{ E_3(t - \tau - t_3) E_2(t - \tau - \tau' - t_2) E_1^*(t - \tau - \tau' - \tau'' - t_1)$$

$$\times \exp \left[ -(\tau - \tau'')^2 \frac{\delta\omega^2}{4} - i\Omega(\tau - \tau'') \right] + E_3(t - \tau - t_3)$$

$$\times E_1^*(t - \tau - \tau' - t_1) E_2(t - \tau - \tau' - \tau'' - t_2)$$

$$\times \exp \left[ -(\tau + \tau'')^2 \frac{\delta\omega^2}{4} - i\Omega(\tau - \tau'') \right] \}$$

Incident light $\varepsilon(t)$ is assumed to be

$$\varepsilon(t) = \sum_{j=1}^{3} E_j(t - t_j) + C.C.$$

$$t_j = t_j' - \frac{n_j \cdot r}{c}$$

$$n_1 = n_3 \neq n_2$$

$$t_1 < t_2 < t_3$$

where symbols $\delta\omega$ and $\Omega$ respectively denote the half width of the inhomogeneous broadened absorption band of the recording medium and the central frequency and $n_1$ denote the wave vector.

In comparison to the reproduced excitation light, the intensity of the photon echo is usually smaller by several digits. In order to accurately detect such a weak light, there has been known a method utilizing the interference of lights.

In this case, the weak light such as the photon echo and a light wave such as the probe light having known phase characteristics are allowed to interfere with each other so that the intensity of the weak light and the change in the phase are measured. In this case, a method has been usually employed in which the intensity or the frequency of the weak light is modulated by a proper means so as to amplify the synchronous component in the synthesized light (synthesized light of the echo light and the probe light) output.

The level of the photon echo signal obtainable from the interference with a fourth light (probe light) and the photon echo shown in Equation (1) is expressed by following Equation (2):

$$S \propto Re \{\exp [- i\omega_e (t_{43} - t_{21})] \cdot \int_0^\infty d\tau$$

$$\times \int_{-\infty}^\infty d\tau'' \ G_R (\tau - t_{43})$$

$$\times G_W {}^*(\tau'' - t_{21}) \ \exp [\frac{- (\tau + |\tau''|)}{T_2}$$

$$- \frac{\delta\omega^2 \ (\tau - \tau'')^2}{4} - i\Delta w \ (\tau - \tau'')] \} \qquad \ldots (2)$$

where the following relationships are held $t_{43} = t_4 - t_3$ and $t_{21} = t_2 - t_1$ and symbols $G_R$ and $G_W$ respectively denote the electric correlation function of the fourth light (probe light) and the third light (reproduced excitation light) and the function of the second light (data light) and the first light (record excitation light) and $\Delta\omega$ denotes detunning.

As derived from Equation (2), the intensity of the light signal formed by the interference between the photon echo and the probe light is considerably changed in accordance with a slight difference between the writing delay time $t_{21}$ and the reading delay time $t_{43}$. This is an excellent advantage of the optical interference method but a disadvantage of the same.

In the optical recording according to the present invention, the write delay time $t_{21}$ and the read delay time $t_{43}$ must coincide with each other in an accuracy of $10^{-16}$ sec in order to perform the reproduction while maintaining an excellent reproductionality. The above-described time corresponds to $10^{-2}$ $\mu$m converted into the optical path. Therefore, a reproducing apparatus for detecting the echo light by the interference of it with a probe light must have a mechanical accuracy of about $10^{-2}$ $\mu$m, causing the overall cost of the apparatus to be excessively raised and the structure of the same to become too complicated and too large.

Furthermore, a problem arises in a case when a data light including a multiplicity of pulses having different delay times is recorded, it takes excessively long time to process the data light. That is, in order to change the optical path or to insert a time modulator into the optical passage, a mirror, a prism, a glass plate and a plastic plate and the like must be moved, causing an excessively long time to taken.

US 4459682 discloses a frequency selective optical data computer memory which stores and accesses time modulated data at discrete spatial locations of an optically absorbing material.

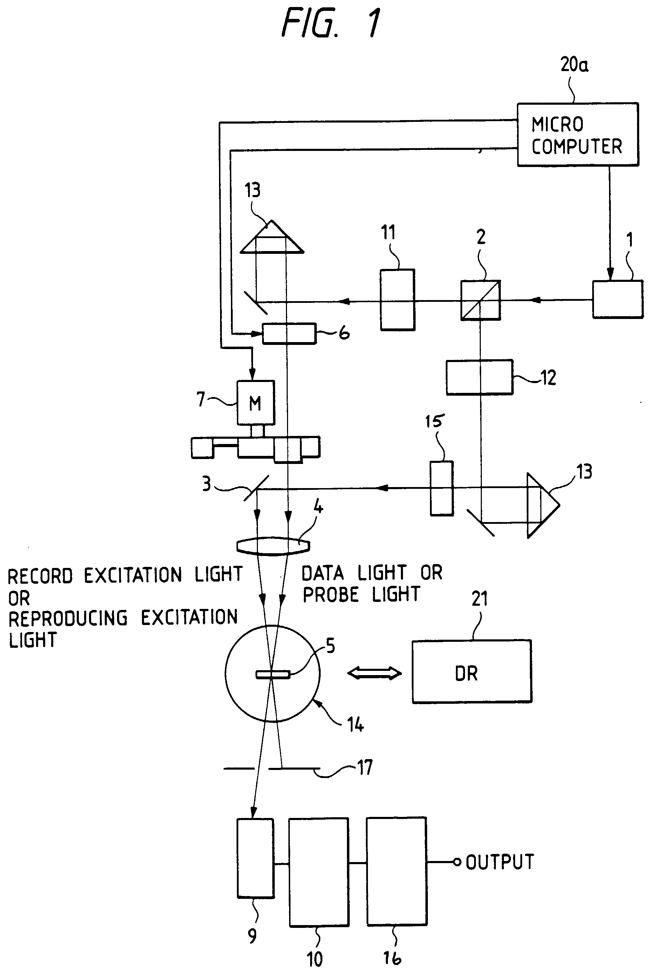

In Optics Letters, volume 14, No. 16, 15th August 1989 at pages 841 - 843 there is disclosed an apparatus similar to that shown in Figure 1 of the present application. The apparatus does not however include a phase modulation means (indicated by numeral 6 in Figure 1 of the present application). Accordingly this apparatus requires high mechanical accuracy, resulting in an expensive, large and complicated structure.

GB 2198546 discloses a method of recording and reproducing a number of images in a recording material maintained at low temperature. Successive images are recorded by varying a voltage applied across the recording material. This method employs a frequency domain memory technique requiring the incident laser beam to be contained within a narrow bandwidth.

## SUMMARY OF THE INVENTION

Accordingly, it would be desirable to provide a recording/reproducing method and apparatus utilizing the stimulated photon echo effect capable of performing multiple recordings based upon another dimension, other than time multiplication, whereby the time required to perform recording and reproducing operations can be shortened.

There is thus provided a method of reproducing information recorded on a recording medium capable of persistent or transient Hole Burning, said method comprising the steps of:

irradiating said medium with a reproducing excitation light and a probe light;
interacting stimulated photon echo light emitted from said medium due to said irradiation of said reproducing excitation light with said probe light; and
converting a synthesized light of said stimulated photon echo light and said probe light, which have been interacted, into an electric signal, characterised by relatively modulating the phase of either said reproducing excitation light or said probe light.

There is further provided an apparatus for reproducing information recorded on a recording medium capable of persistent or transient Hole Burning, said apparatus comprising:

(a) means for irradiating a reproducing excitation light to said medium;
(b) means for irradiating a probe light to said medium;
(c) an optical system for irradiating said reproducing excitation light and said probe light to the same location on said medium so that said probe light interacts with photon echo light generated upon receipt of reproducing excitation light at one or more spatial points;
(d) means for relatively delaying said probe light by a selected amount with respect to said reproducing excitation light;
(e) means for converting a synthesized light obtained by the interaction of said stimulated photon echo light and said probe light characterised by
(f) phase modulation means for modulating the phase of either said reproducing excitation light or said probe light.

There is also provided a method of recording information on a recording medium capable of persistent or transient Hole Burning, said method comprising the steps of:

irradiating a record excitation light and a data light to the same location on said medium; and
applying a selected DC voltage or a selected magnetic field when said record excitation light and said data light are irradiated to said medium, characterised by relatively delaying said data light by a selected amount with respect to said excitation light.

There is also provided an apparatus for recording information on a recording medium capable of persistent or transient Hole Burning, said apparatus comprising:

(a) means for irradiating a record excitation light to said medium;
(b) means for irradiating a data light to said medium;
(c) an optical system for irradiating said record excitation light and said data light to the same location on said medium; and
(d) means for applying a selected DC voltage or a selected magnetic field to said medium when said record excitation light and said data light are irradiated to said medium, characterised by means for relatively delaying said data light by a selected amount with respect to said record excitation light.

There is further provided a method of reproducing information recorded on a recording medium capable of transient or persistent Hole Burning, said method comprising the steps of:

irradiating a reproducing excitation light and a probe light to the same location on said medium;
relatively delaying said probe light by a selected amount with respect to said reproducing excitation light;
interacting said probe light with stimulated photon echo light emitted from said medium due to irradiation by said reproducing excitation light;
converting synthesised light, resulting from interacting said probe light and said stimulated photon echo light, into an electric signal,

characterised by applying a selected DC voltage or a selected magnetic field to said medium when said reproducing excitation light and said probe light are irradiated upon said medium.

There is also provided apparatus for reproducing information recorded on a recording medium capable of persistent or transient Hole Burning, said apparatus comprising:

means for irradiating a reproducing excitation light to said medium;
means for irradiating a probe light to said medium;
an optical system for irradiating said reproducing excitation light and said probe light to the same location on said medium so that said probe light interacts with photon echo light generated upon receipt of reproducing excitation light at one or more spatial points;
means for relatively delaying said probe light by a selected amount with respect to said reproducing excitation light;
means for converting a synthesised light obtained by the interaction of said probe light and said stimulated echo light into an electrical signal, characterised by
means for applying a selected DC voltage or a selected magnetic field to said medium when said reproducing excitation light and said probe light are irradiated to said medium.

If $t_{43} - t_{21}$ is modulated over one cycle of the light, the intensity of the synthesized light of the echo light and the probe light is also modulated in synchronization with it from the above-described Equation (2). Although $G_R$ and $G_W$ shown in Equation (2) can be usually assumed to be Gaussian factors, the factor S becomes the product of a Gaussian function and a trigonometric function in this case. If the half value width of a Gaussian function is made sufficiently longer than the period of the trigonometric function, the amplitude of a modulation component of the synthesized light signal S of the echo light and the probe light obtained by modulating $t_{43} - t_{21}$ is able to reliably reproduce the Gaussian components of the signal S. Therefore, the echo light can be stably detected by modulating the delay time $t_{43}$ at the reading operation with respect to the delay time $t_{21}$ at the writing operation and by detecting the synchronous component of the intensity of the synthesized light of the echo light and probe light.

BRIEF DESCRIPTION OF THE DRAWINGS

Fig. 1 is a schematic view of a first embodiment of the present invention;
Fig. 2 is a plan view which illustrates a portion of the first embodiment of the present invention;
Figs. 3A and 3B respectively illustrate the results of experiments according to the first embodiment of the present invention;
Fig. 4 is a schematic view which illustrates a portion of a second embodiment of the present invention;
Fig. 5 is a cross sectional view which illustrates a portion of the second embodiment of the present invention;
Figs. 6 and 7 respectively illustrate the results of experiments according to the second embodiment of the present invention;
Fig. 8 is a schematic view which illustrates a modification to the present invention; and
Fig. 9 illustrates the results of experiments according to the modification to the present invention.

DESCRIPTION OF THE PREFERRED EMBODIMENTS

Preferred embodiments of the present invention will now be described specifically. The present invention is not limited to the descriptions made below.

Fig. 1 is a schematic view which illustrates the essential structure of an optical recording/reproducing apparatus according to a first embodiment of the present invention.

A light source 1, which is arranged to serve as both a excitation light source and a probe light source, comprises a mode synchronous YAG laser higher harmonic excitation kiton red laser capable of emitting a pulse light of a repetition frequency of 82 MHz. According to this embodiment, all of wavelength selection devices have been removed from the kiton red laser. As a result, an incoherent light can be obtained which has a central wavelength of 620 nm and a spectral width of 400 cm$^{-1}$ (which corresponds to correlation time of 37 femtoseconds).

The incoherent light emitted from the light source 1 is, by a beam splitter 2, divided into (a) record excitation light ($E_1$) or a reproducing excitation light ($E_3$) and (b) data light ($E_2$) or probe light ($E_4$).

The reproducing excitation light of (a) is subjected to amplitude modulation (AM) at 5 MHz by an optical modulator (a photo-acoustic device) 12. Although this process is performed for the purpose of improving the S/N ratio at the reproduction, it may be omitted to obtain the effect of the present invention. The reproducing excitation light passes through an optical compensator 15, a triangular prism 13 and a reflecting mirror 3 before its route is bent perpendicularly by the reflecting mirror 3. Then, it is made incident upon a lens 4 at which it is converged so that it is applied to a PHB recording medium.

On the other hand, the light (b) passes through the optical compensation 11 after it has passed through the beam splitter 2. The optical compensator 11 is used for the purpose of compensating the group velocity dispersion, which takes place in the reproducing excitation light due to its passage through the optical modulator 12, by causing the probe light to generate the similar group velocity dispersion to the excitation light.

Therefore, it is preferable that the optical compensator 11 which is the same as that of the optical modulator 12 be used in such a manner that no modulation is performed.

The data light or the probe light which has passed through the optical compensator 11 is made incident upon a phase modulation means 6 via a triangular prism 13 at which it is then subjected to a phase modulation. However, the phase of the data light is not modulated. The optical compensator 15 serves as the optical compensator for the phase modulation means 6.

The phase modulation means 6 comprises, for example, an LiTaO$_3$ electro-optical device arranged in such a manner that the modulated phase width is $2\pi$ and the modulation frequency is 10 KHz. In order to modulate the phase, another structure may be employed in which reflecting mirrror such as the prism 13 is slightly vibrated and the optical path is thereby vibrated.

Then, the data light or the probe light is made incident upon a retrieval modulation means 7 at which the data light is modulated so as to cause the delay times of the record excitation electric field and the data light electric field to be changed in accordance with information to be recorded.

On the other hand, the probe light is swept in such a manner that the delay times of the reproducing excitation light electric field and the probe light electric field to be changed from a first predetermined value to a second predetermined value.

The thus modulated data light or the swept probe light is made incident upon the lens 4 at which it is then converged so that it is applied to the same location of the recording medium which is applied with the record excitation light or the reproducing excitation light.

According to this embodiment, the optical system and the like are arranged in such a manner that the echo light travels in the same direction as the direction in which the probe light passes through the recording medium 5 and emits from the same. Therefore, the light of the probe light which has passed through the recording medium is a synthesized light formed by overlapping (interacting) the echo light and the probe light although an overlapping (interacting) means 8 is omitted from the illustration.

An optical detector 9 comprising a photomultiplier is disposed in a direction in which the probe light travels so that the synthesized light is converted into an electric signal. The thus obtained electric signal is then processed in a high speed lockin amplifier 10 so that only an AM modulated component of 5 MHz is taken out as an output.

The output from the high speed lockin amplifier 10 is supplied to a low speed lockin amplifier 16 at which only a modulation component of 10 KHz is amplified. The noise of the output from the low speed lockin amplifier 16 is removed so that it is clearly modulated so as to correspond to information to be recorded to the recording medium.

Reference numeral 14 represents a liquid helium cryostat for cooling the recording medium 5 for the purpose of implement the present invention since the recording medium must, at present, be cooled to an extremely low temperature.

Reference 20a represents a micro-computer which is used to control the light source 1, the phase modulation means 6 and the retrieval modulation means 7. Reference 21 represents a drive means for driving the recording medium 5. Reference 17 in Figure 1 shows a diaphragm which allows data light and probe light to be incident on a photoelectric converting element 9 but prevents record excitation light and reproducing excitation light from entering thereinto.

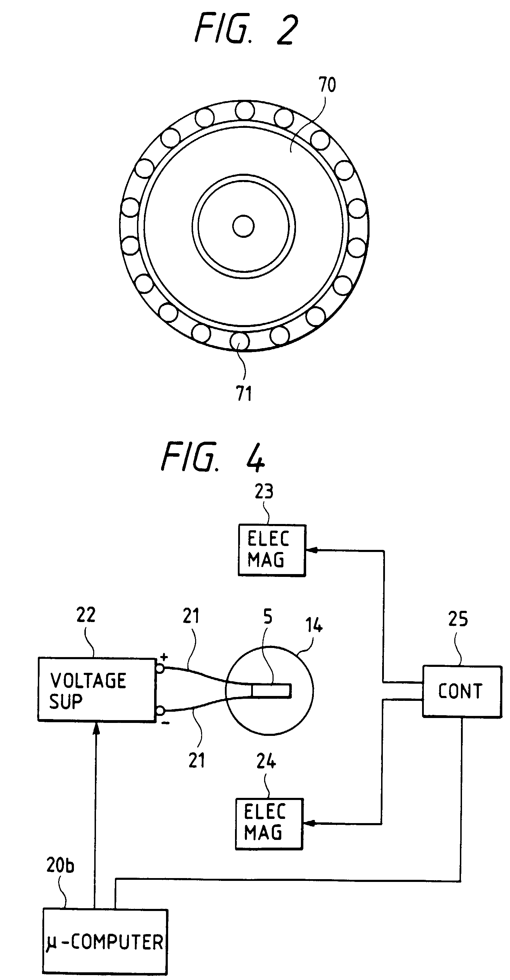

Fig. 2 is a schematic plan view which illustrates an example of the retrieval modulation means used in the structure shown in Fig. 1. The retrieval modulation means 7 comprises a rotatable disc 70 and a multiplicity of circular openings formed in the periphery of the disc 70, each of the openings has a glass plate 71 fitted therein and having different thicknesses.

The structure is arranged in such a manner that the multiplicity of the glass plates 71 are arranged in accordance with their thickness from a thin glass plate (4.52 picoseconds) so that the light traveling time is successively increased by 0.24 picoseconds.

As a means for changing the delay time as an alternative to the structure shown in Fig. 2, another structure may be employed in which an optical member such as a triangular prism shown in Fig. 1 and having two reflecting surfaces is moved in the light incidental direction. In this structure, the optical path can be adjusted by adjusting the distance of the movement, and the delay time can thereby be changed.

Then, experiments subjected to the structure according to the first embodiment will be described.

(1) Medium

A plate-like member having a thickness of 3 mm was manufactured by dispersing octaethylpolyfin into polymethylmethacrylate by $10^{-5}$ mol/$\ell$ in a level of a molecular so as to serve as the recording medium 5.

(2) Record

The recording medium 5 was placed in a liquid helium cryostat 14 while maintaining the temperature at 10K.

Then, the disc 70 of the retrieval modulation means 7 shown in Fig. 2 was rotated and the light was allowed to pass through the glass plates 71 having different thicknesses. As a result, the delay time of the data light was changed from 5.0 psec (picoseconds hereinafter), 5. 24 psec. and 5.48 psec with respect to the record excitation light, the data light and the record excitation light being then applied. At this time, it was arranged that the incoherent light intensity which is the sum of those of the reproducing excitation light and the probe light was 200 $\mu$W/cm$^2$ and a write time for each point was 6 seconds. As a result, three light pulses having the above-described delay times have been written.

(3) Also in this operation, the reproducing excitation light and the probe light were emitted from the same light source 1 similarly to the recording operation. At this time, the incoherent light intensity which is the sum of those of the reproducing excitation light and the probe light was diaphragmed to 2 $\mu$W/cm$^2$.

As for the probe light, the delay time was swept from a first predetermined value 4.52 psec to a second predetermined time 6.92 psec by rotating the disc 70 of the retrieval modulation means 7.

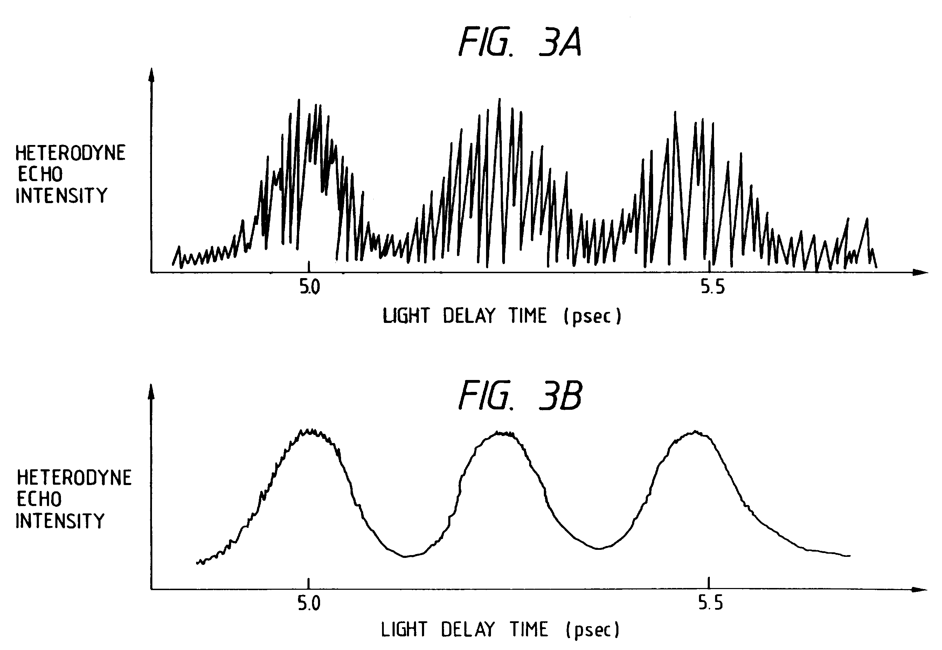

At this time, when the phase modulation means 6 was operated, the output shown in Fig. 3B was obtained, while, when the phase modulation means 6 was not operated, the output shown in Fig. 3A was obtained.

The inventors found a fact that, when data light is applied to a recording medium at the recording operation while applying DC voltage or a electric field to the recording medium, echo light with the same time delay as that at the recording operation can be observed at the time of the reproduction operation only when the same voltage or the same electric field is applied to the recording medium.

A second embodiment of the present invention is arranged to perform recording or reproducing by applying DC voltage or an electric field to the medium. The principle of the second embodiment will be described with reference to a case in which DC voltage is applied.

According to the second embodiment, information about the data light can be expressed by delay time $\tau$ of the data light with respect to the record excitation light and supply voltage V at the time of writing the data light. That is, the position of the data light on the two dimensional coordinate corresponds to the information about the data light, the two dimensional coordinate being constituted by an axis which stands for the delay time $\tau$ and an axis which stands for the voltage V.

(1-1) Write process

The level of the voltage according to the above-described embodiemnt and to be applied to the recording medium while applying write excitation light and data light is changed from the first predetermined value to the second predetermined value. As an alternative to this, light may be applied only when level of the voltage becomes a predetermined voltage.

(2-1) Read process

When the reproducing excitation light and voltage are applied to the recording medium and the level of the voltage is set to the predetermined level or the same is changed from the first predetermined level to the second predetermined level, the data light can be reproduced as an echo light when the voltage level coincides with the voltage level at the time of the recording operation.

(1-2) Another write process

A plurality of pulse lights are recorded while applying a predetermined DC voltage level (or an electric field) to the recording medium.

(2-2) Another read process

In the above-described write process (1-2), data light is reproduced as an echo light only when the voltage level which is the same as that at the recording operation is applied to the recording medium. That is, if a reproducing excitation light is applied while applying a voltage which is different from the voltage at the time of the writing operation to the recording medium, data light is not reproduced.

The above-described write process (2-1) and the read process (2-2) are not affected each other and novel record can be performed if the level of the applied voltage is changed even if the delay times of the data light are the same.

The voltage may be applied to the recording medium in a vertical direction to the plane of the recording medium or in a parallel direction to the same.

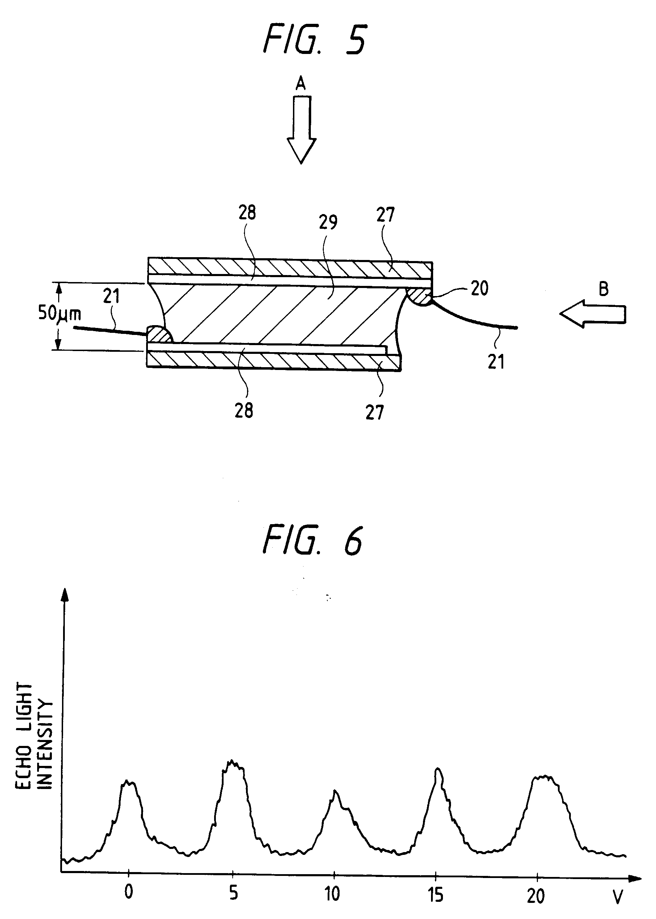

Then, the structure of the second embodiment will be described with reference to Fig. 4. The structure of an apparatus according to the second embodiment is arranged in such a manner that either a voltage applying means 22 for applying the voltage to the medium 5 or a magnetic field applying means constituted by electric magnets 23 and 24 and a control circuit 25 is provided in addition to the elements according to the first embodiment, the above-described means being controlled by a microcomputer 20b. The microcomputer 20 also controls the modulation means 7 and the light source 1 similarly to the computer 20a.

The second embodiment was subjected to experiments under the following conditions.

(1) The PHB recording medium was manufactured in such a manner that a material prepared by dissolving 10$^{-4}$ mol/$\ell$ of oxazine 4 (LAMDA PHYSIK, West Germany) into hydroxyethylmethacrylate (abbreviated to "HEMA" hereinafter) was injected between two glass substances 27 each of which has a transparent electrode layer 28 before polymerizing the HEMA. The polymerized layer serves as a recording layer 29.

(2) The electrode layer 28 formed on the recording medium 5 is connected to a DC power source 22 via a lead wire 21 so that DC voltage is applied to the recording layer 29.

By adjusting the power source 22, the voltage level to be applied to the recording medium 5 is intermittently changed as 0, 5, 10, 15 and 20V.

On the other hand, a proper glass plate is selected by rotating the disc 70 of the time modulator 7 so as to make the delay time $\tau$ of the data light which passes through it to be 100 psec.

A record excitation light pulse (pulse width 100 psec) and data light pulse of the delay time $\tau = 100$ psec (pulse width 100 psec) were applied to the same location on the recording medium 5 whenever the voltage level was changed. The light application was performed under the following conditions: the luminous intensity was 200 $\mu$W/cm$^2$ and the time of the application was 6 seconds (that is, when the application of the record excitation light pulse and the ensuing application of the data light pulse were counted as one time, applications of 6 x 82 x 10$^6$ times was repeated).

Although the lights were applied in a direction designated by an arrow A of Fig. 5, they may be applied in a direction designated by an arrow B.

(3) By using the medium 5, the luminous intensity was made 1/100 of that at the recording operation and the applied voltage was swept from the first predetermined level (0V) to the second predetermined level (25V) so that read was performed, resulting as shown in Fig. 6.

Then, the delay time $\tau$ was changed to 101 psec and recording was performed while changing the applied voltage to 0V, 10V and 20V. Reading was performed by changing the probe light delay time $\tau$ to:

101 psec at the first time
102 psec at the second time.

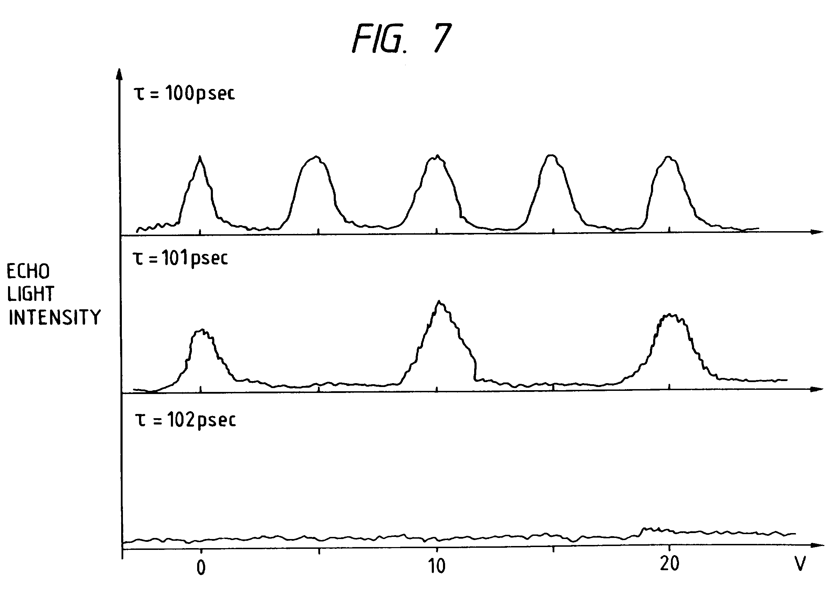

The result of the reading are shown in Fig. 7.

As a result of a further study, it was found that different information can be written by making difference the direction of the electric field and the magnetic field given to the medium and the polarization plane of light to be applied.

Then, a modification of the time modulator 7 employed in the first and second embodiments of the present invention will be described. In a case where, as shown in Fig. 2, a plurality of glass plates are successively arranged in accordance with the thickness starting from the most thin plate in order to successively elongate the delay time in a unit of 1 psec, 1000 glass plates having different thicknesses must be prepared in order to make 1000 different delay times if 1000 bit data is written.

Furthermore, since a disc (a supporting member) to which the glass plates are fastened must be moved considerably, a random access operation for selecting a desired glass plate takes an excessively long time in the case where there are provided a multiplicity of delay times.

If a sole transparent medium such as a glass plate is used, only a specific delay time corresponding to the thickness can be created. However, if a plurality of transparent media are layered, other delay times can be created although they are dispersive.

If the thickness is determined so as to hold the following relationship with respect to an optional j assuming that the thickness of the transparent medium is $d_j$ (j = 1, 2, 3, ..., m), 2$^m$ delay times can be created by inserting or drawing out each of the transparent media from the optical passage:

$$d_j > \sum_{k=1}^{j-1} d_k$$

That is, many delay times can be created by combining a small number of the transparent media. For example, 1024 different delay times can be created by using 10 glass plates.

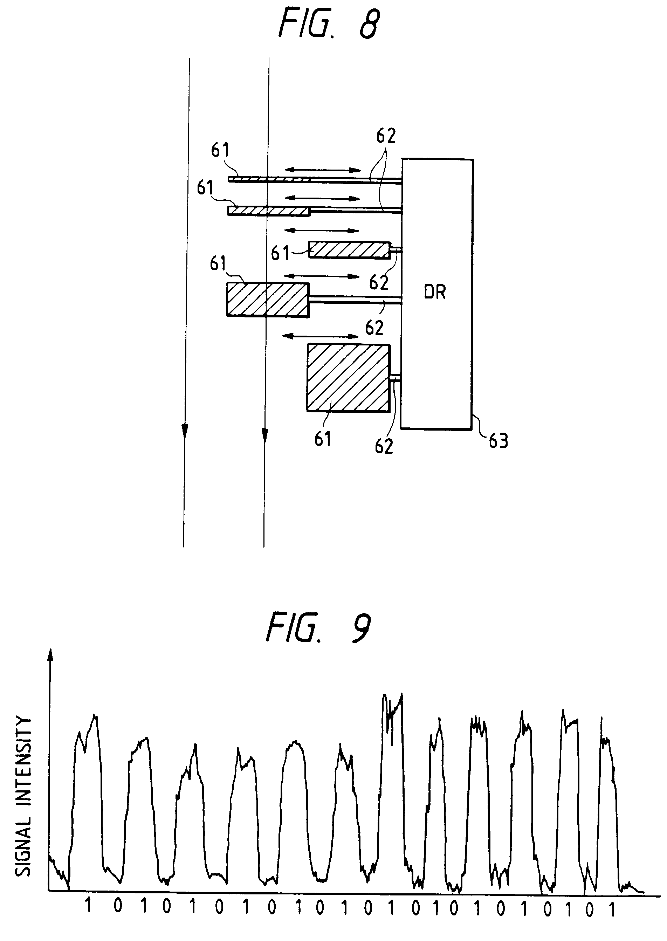

Fig. 8 illustrates the structure of this modification. The apparatus according to this modification comprises a plurality of glass plates 61 each of which is a transparent medium, the same number of arms 62 for supporting the glass plates 61 and a drive mechanism 63 for repeatedly inserting/drawing out the glass plates 61 from the optical passage through which the data light or the probe light travels by moving the arm 62.

As the glass plates 61, quartz glass the refraction factor of which was 1.475 was employed and the thickness $d_j$ was arranged to be 0.51 mm, 1.01 mm, 2.02 mm, 4.04 mm and 8.08 mm so that the light delay time was made to be 0.8 psec, 1.6 psec, 3.2 psec, 6.4 psec and 12.8 psec.

The above-described glass plates 61 are supported by arms which are capable of moving them perpendicular to the optical passage through which the data light and the probe light travel, the glass plates 61 being arranged in the direction of the optical passage. Therefore, the delay time can be successively changed from zero second to 25 psec at intervals of 0.8 psec by inserting a combination of the plurality of glass plates 61 into the optical passage.

In order to prevent the change in the thickness of the quartz glass during recording and reproducing, the overall body of the delay device is placed in a constant-temperature bath at the time of use.

The device according to this embodiment was subjected to the following experiments.

(1) The light source 1 comprises a CW mode locked Ar+ laser pumped kiton red dye laser which is capable of emitting a pulse light of a repetition frequency of about 80 MHz. In this case, the output light was made to be an incoherent light having central wavelength of 630 nm and the spectral width of about 30 cm$^{-1}$ by using a birefrigence filter (omitted from illustration) in order to absorb the zero-phonon absorption band of the OEP. The repetion frequency of the light pulse is about 80 MHz and the correlation time of. the same is about 500 femtoseconds.

(2) As a PHB recording medium 5, a disk was used the recording layer of which was made of a film of about 1 mm in thickness and prepared by dissolving $3 \times 10^{-4}$ wt% octaethylporphine (OEP) into polymethylmethacrylate (PMMA).

(3) As the optical recording/reproducing apparatus, the apparatus according to the third embodiment was used.

(4) By properly inserting/drawing out the plurality of glass plates 61 of the apparatus shown in Fig. 8, the light delay time of the light which passes there is changed by 0.8 or 1.6 psec.

(5) Writing was successively performed to the same location on the medium 5 to which no information has been written at a light output of 30 µW and writing interval at each of the time points was 10 seconds while changing the delay time by an interval of 1.6 psec.

Then, read was performed at an interval of the light delay time of 0.8 psec while diaphragming the sum of the output of the reproducing excitation light and the probe light to 0.1 µW, resulting as shown in Fig. 9.

The time taken at this time was about two minutes in the recording and about four minutes in the reproducing. Therefore, the time necessary to change the light delay time can be significantly shortened negligible with respect to the overall necessary operation time.

Although the invention has been described in its preferred form with a certain degree of particularly, it is understood that the present disclosure of the preferred form has been changed in the details of construction and the combination and arrangement of parts may be resorted to without departing from the spirit and the scope of the invention as hereinafter claimed.

## Claims

1. A method of reproducing information recorded on a recording medium capable of persistent or transient Hole Burning, said method comprising the steps of:

   irradiating said medium with a reproducing excitation light and a probe light;
   interacting stimulated photon echo light emitted from said medium due to said irradiation of said reproducing excitation light with said probe light; and
   converting a synthesized light of said stimulated photon echo light and said probe light, which have been interacted, into an electric signal, characterised by relatively modulating the phase of either said reproducing excitation light or said probe light.

2. An apparatus for reproducing information recorded on a recording medium (5) capable of persistent or transient Hole Burning, said apparatus comprising:

   (a) means (1, 2, 12, 13, 15) for irradiating a reproducing excitation light to said medium (5);
   (b) means (1, 2, 11, 13) for irradiating a probe light to said medium (5);
   (c) an optical system (4) for irradiating said reproducing excitation light and said probe light to the same location on said medium (5) so that said probe light interacts with photon echo light generated upon receipt of reproducing excitation light at one or more spatial points;
   (d) means (7; 61, 62, 63) for relatively delaying said probe light by a selected amount with respect to said reproducing excitation light;
   (e) means (9, 10, 16) for converting a synthesized light obtained by the interaction of said stimulated photon echo light and said probe light;

   characterised by
   (f) phase modulation means (6) for modulating the phase of either said reproducing excitation light or said probe light.

3. A method of recording information on a recording medium capable of persistent or transient Hole Burning, said method comprising the steps of:

irradiating a record excitation light and a data light to the same location on said medium; and
applying a selected DC voltage or a selected magnetic field when said record excitation light and said data light are irradiated to said medium, characterised by relatively delaying said data light by a selected amount with respect to said excitation light.

4. A method according to claim 3, wherein, in said applying step, the levels of said DC voltage or said magnetic field applied to said medium at the time at which said record excitation light is irradiated and the time at which said data light is irradiated are substantially the same.

5. A method according to claim 3 wherein the level of said DC voltage or said magnetic field applied to said medium is changed when two or more different data lights are irradiated to the same location on said medium.

6. An apparatus for recording information on a recording medium capable of persistent or transient Hole Burning, said apparatus comprising:

(a) means (1, 2, 12, 13, 15) for irradiating a record excitation light to said medium (5);
(b) means (1, 2, 11, 13) for irradiating a data light to said medium (5);
(c) an optical system (4) for irradiating said record excitation light and said data light to the same location on said medium (5) ; and
(d) means (20b, 21, 22, 23, 24, 25) for applying a selected DC voltage or a selected magnetic field to said medium (5) when said record excitation light and said data light are irradiated to said medium (5), characterised by means (7; 61, 62, 63) for relatively delaying said data light by a selected amount with respect to said record excitation light.

7. An apparatus according to claim 6, wherein said applying means (20b, 21, 22, 23, 24, 25) makes the levels of said DC voltage or said magnetic field applied to said medium (5) at the time at which said record excitation light is irradiated and the time at which said probe light is irradiated to be substantially the same.

8. An apparatus according to claim 6, wherein said applying means (20b, 21, 22, 23, 24, 25) changes the level of said DC voltage or said magnetic field applied to said medium (5) when two or more data lights are irradiated to the same location on said medium.

9. A method according to claim 1, further comprising the step of:
applying a selected DC voltage or a selected magnetic field to said medium when said reproducing excitation light and said probe light are irradiated to said medium.

10. A method according to claim 9, wherein, in said step, the levels of said DC voltage or said magnetic field applied to said medium at the time at which said reproducing excitation light is irradiated and the time at which said probe light is irradiated are substantially the same.

11. A method according to claim 9 comprising a step in which the level of said DC voltage or said magnetic field applied to said medium is changed.

12. An apparatus according to claim 2 further comprising:
applying means (20b, 21, 22, 23, 24, 25) for applying a selected DC voltage or a selected magnetic field to said medium (5) when said reproducing excitation light and said probe light are irradiated to said medium (5).

13. An apparatus according to claim 12, wherein said applying means (20b, 21, 22, 23, 24, 25) makes the levels of said DC voltage or said magnetic field applied to said medium (5) at the time at which said reproducing excitation light is irradiated and the time at which said probe light is irradiated to be substantially the same.

14. An apparatus according to claim 12, wherein said applying means (20b, 21, 22, 23, 24, 25) changes the level of said DC voltage or said magnetic field applied to said medium (5).

15. A method according to claim 3, further comprising the steps of:

preparing a light source generating incoherent light;

dividing said incoherent light from said light source into said recording excitation light and said data light components;

preparing a plurality of light permeable members; and

allowing either of said two light components to pass through two or more light permeable members in order to change the incidental time of said light component upon said medium and the incidental time of the other light component upon said medium in accordance with information to be recorded.

**16.** An apparatus according to claim 6 further comprising:

a light source (1) for generating incoherent light;

means (2) for dividing said incoherent light supplied from said light source into said recording excitation light and said data light components;

a plurality of light permeable members (71, 61); and

means (7; 62, 63) for allowing either of said two light components to sequentially pass through two or more light permeable members (61; 71) in order to change the incidental time of said light component upon said medium (5) and the incidental time of the other light component upon said medium (5) in accordance with information to be recorded.

**17.** A method of reproducing information recorded on a recording medium capable of transient or persistent Hole Burning, said method comprising the steps of:

irradiating a reproducing excitation light and a probe light to the same location on said medium;

relatively delaying said probe light by a selected amount with respect to said reproducing excitation light;

interacting said probe light with stimulated photon echo light emitted from said medium due to irradiation by said reproducing excitation light;

converting synthesised light, resulting from interacting said probe light and said stimulated photon echo light, into an electric signal,

characterised by applying a selected DC voltage or a selected magnetic field to said medium when said reproducing excitation light and said probe light are irradiated upon said medium.

**18.** Apparatus for reproducing information recorded on a recording medium (5) capable of persistent or transient Hole Burning, said apparatus comprising:

means (1, 2, 12, 13, 15) for irradiating a reproducing excitation light to said medium (5);

means (1, 2, 11, 13) for irradiating a probe light to said medium (5);

an optical system (4) for irradiating said reproducing excitation light and said probe light to the same location on said medium (5) so that said probe light interacts with photon echo light generated upon receipt of reproducing excitation light at one or more spatial points;

means (7; 61, 62, 63) for relatively delaying said probe light by a selected amount with respect to said reproducing excitation light;

means (9, 10, 16) for converting a synthesised light obtained by the interaction of said probe light and said stimulated echo light into an electrical signal, characterised by

means (20b, 21, 22, 23, 24, 25) for applying a selected DC voltage or a selected magnetic field to said medium (5) when said reproducing excitation light and said probe light are irradiated to said medium (5).

## Patentansprüche

**1.** Verfahren zum Wiedergeben von Information, die auf einem Aufzeichnungsmedium aufgezeichnet ist, welches sich zum dauerhaften oder vorübergehenden Loch-Einbrennen eignet, umfassend die Schritte:

- Bestrahlen des Mediums mit einem Wiedergabe-Anregungslicht und einem Sondenlicht,
- Interagieren-Lassen des von dem Medium aufgrund der Bestrahlung mit dem Wiedergabe-Anregungslicht emittierten, angeregten Photonenecholichts mit dem Sondenlicht, und
- Umwandeln eines synthetisierten Lichts aus dem angeregten Photonenecholicht und dem Sondenlicht, die miteinander interagiert haben, in ein elektrisches Signal,

gekennzeichnet durch
das relative Modulieren der Phase entweder des Wiedergabe-Anregungslichts oder des Sondenlichts.

2. Vorrichtung zum Wiedergeben von Information, die auf einem Aufzeichnungsmedium (5) aufgezeichnet ist, welches sich zum dauerhaften oder vorübergehenden Loch-Einbrennen eignet, umfassend:

(a) eine Einrichtung (1, 2, 12, 13, 15) zum Aufstrahlen des Mediums (5) mit einem Wiedergabe-Anregungslicht,
(b) eine Einrichtung (1, 2, 11, 13) zum Aufstrahlen des Mediums (5) mit einem Sondenlicht,
(c) ein optisches System (4) zum Aufstrahlen des Wiedergabe-Anregungslichts und des Sondenlichts auf die gleiche Stelle des Mediums (5) in der Weise, daß das Sondenlicht mit dem Photonenecholicht interagiert, welches bei Empfang des Wiedergabe-Anregungslichts an einem oder mehreren räumlichen Punkten erzeugt wird,
(d) eine Einrichtung (7; 61, 62, 63) zum relativen Verzögern des Sondenlichts um einen ausgewählten Betrag gegenüber dem Wiedergabe-Anregungslicht,
(e) eine Einrichtung (9, 10, 16) zum Umwandeln synthetisierten Lichts, welches durch die Interaktion des angeregten Photonenecholichts mit dem Sondenlicht erhalten wird,

gekennzeichnet durch
(f) eine Phasenmoduliereinrichtung (6) zum Modulieren der Phase entweder des Wiedergabe-Anregungslichts oder des Sondenlichts.

3. Verfahren zum Aufzeichnen von Information, die auf einem Aufzeichnungsmedium aufgezeichnet ist, welches sich zum dauerhaften oder vorübergehenden Loch-Einbrennen eignet, umfassend folgende Schritte:

- ein Aufzeichnungs-Anregungslicht und ein Datenlicht werden auf dieselbe Stelle auf dem Medium gestrahlt, und
- wenn das Aufzeichnungs-Anregungslicht und das Datenlicht aufgestrahlt werden, wird eine ausgewählte Gleichspannung oder ein ausgewähltes magnetisches Feld an das Medium gelegt,

gekennzeichnet durch
das relative Verzögern des Datenlichts um einen ausgewählten Betrag in Bezug auf das Anregungslicht.

4. Verfahren nach Anspruch 3, bei dem
in dem Anlege-Schritt die Pegel der an das Medium angelegten Gleichspannung oder des magnetischen Feldes zu der Zeit, zu der das Aufzeichnungs-Anregungslicht aufgestrahlt wird und zu der Zeit, zu der das Datenlicht aufgestrahlt wird, im wesentlichen gleich groß sind.

5. Verfahren nach Anspruch 3, bei dem
der Pegel der an das Medium angelegten Gleichspannung oder des magnetischen Feldes geändert wird, wenn zwei oder mehr unterschiedliche Datenlichte auf die gleiche Stelle des Mediums gestrahlt werden.

6. Vorrichtung zum Aufzeichnen von Information auf ein Aufzeichnungsmedium, welches sich zum dauerhaften oder vorübergehenden Loch-Einbrennen eignet, umfassend:

(a) eine Einrichtung (1, 2, 12, 13, 15) zum Aufstrahlen eines Aufzeichnungs-Anregungslichts auf das Medium (5),
(b) eine Einrichtung (1, 2, 11, 14) zum Aufstrahlen eines Datenlichts auf das Medium (5),
(c) ein optisches System (4) zum Aufstrahlen des Aufzeichnungs-Anregungslichts und des Datenlichts auf dieselbe Stelle auf dem Medium (5), und
(d) eine Einrichtung (20b, 21, 22, 23, 24, 25) zum Anlegen einer ausgewählten Gleichspannung oder eines ausgewählten Magnetfeldes an das Medium (5), wenn das Aufzeichnungs-Anregungslicht und das Datenlicht auf das Medium (5) aufgestrahlt werden,

gekennzeichnet durch
eine Einrichtung (7; 61, 62, 63) zum relativen Verzögern des Datenlichts um einen ausgewählten Betrag in Bezug auf das Aufzeichnungs-Anregungslicht.

7. Vorrichtung nach Anspruch 6, bei der

EP 0 425 278 B1

die Anlege-Einrichtung (20b, 21, 22, 23, 24, 25) die Pegel der Gleichspannung oder des magnetischen Feldes, die an das Medium (5) angelegt werden, zu der Zeit, zu der das Aufzeichnungs-Anregungslicht aufgestrahlt wird, und zu der Zeit, zu der das Sondenlicht aufgestrahlt wird, im wesentlichen gleich groß macht.

8. Vorrichtung nach Anspruch 6, bei der
die Anlege-Einrichtung (20b, 21, 22, 23, 24, 25) den Pegel der an das Medium (5) angelegten Gleichspannung oder des magnetischen Feldes ändert, wenn zwei oder mehr Datenlichte auf dieselbe Stelle des Mediums aufgestrahlt werden.

9. Verfahren nach Anspruch 1,
gekennzeichnet durch den Schritt:
Anlegen einer ausgewählten Gleichspannung oder eines ausgewählten magnetischen Feldes an das Medium, wenn das Wiedergabe-Anregungslicht und das Sondenlicht auf das Medium gestrahlt werden.

10. Verfahren nach Anspruch 9, bei dem
in dem Schritt die Pegel der an das Medium angelegten Gleichspannung oder des angelegten Magnetfeldes zu der Zeit, zu der das Wiedergabe-Anregungslicht aufgestrahlt wird, und zu der Zeit, zu der das Sondenlicht aufgestrahlt wird, im wesentlichen gleich groß sind.

11. Verfahren nach Anspruch 9,
gekennzeichnet durch
den Schritt, bei dem der Pegel der an das Medium angelegten Gleichspannung oder des angelegten Magnetfeldes geändert wird.

12. Vorrichtung nach Anspruch 2,
weiterhin umfassend:
eine Anlege-Einrichtung (20b, 21, 22, 23, 24, 25) zum Anlegen einer ausgewählten Gleichspannung oder eines ausgewählten magnetischen Feldes an das Medium (5), wenn das Wiedergabe-Anregungslicht und das Sondenlicht auf das Medium (5) aufgestrahlt werden.

13. Vorrichtung nach Anspruch 12, bei der
die Anlege-Einrichtung (20b, 21, 22, 23, 24, 25) die Pegel der Gleichspannung oder des magnetischen Feldes, die bzw. das an das Medium (5) angelegt wird, zu der Zeit, zu der das Wiedergabe-Anregungslicht aufgestrahlt wird, und zu der Zeit, zu der das Sondenlicht aufgestrahlt wird, im wesentlichen gleich groß macht.

14. Vorrichtung nach Anspruch 12, bei der
die Anlege-Einrichtung (20b, 21, 22, 23, 24, 25) den Pegel der an das Medium (5) angelegten Gleichspannung oder des angelegten magnetischen Feldes ändert.

15. Verfahren nach Anspruch 3,
weiterhin umfassend die Schritte:

- Bereitstellen einer nicht-kohärentes Licht erzeugenden Lichtquelle,
- Aufteilen des von der Lichtquelle kommenden nicht-kohärenten Lichts in die Aufzeichnungs-Anregungslicht- und die Datenlicht-Komponenten,
- Bereitstellen mehrerer lichtdurchlässiger Glieder, und
- Zulassen, daß eine der zwei Lichtkomponenten durch zwei oder mehr lichtdurchlässige Glieder läuft, um die Auftreffzeit der Lichtkomponente auf dem Medium und die Auftreffzeit der anderen Lichtkomponente auf dem Medium nach Maßgabe der aufzuzeichnenden Information zu ändern.

16. Vorrichtung nach Anspruch 6,
weiterhin umfassend:

- eine Lichtquelle (1) zum Erzeugen von nicht-kohärentem Licht,
- eine Einrichtung (2) zum Unterteilen des von der Lichtquelle gelieferten nicht-kohärenten Lichts in die Aufzeichnungs-Anregungslicht- und die Datenlicht-Komponenten,
- eine Mehrzahl von lichtdurchlässigen Gliedern (71, 61), und
- eine Einrichtung (7; 62, 63), die es ermöglicht, daß eine der beiden Lichtkomponenten nacheinander durch

14

zwei oder mehr lichtdurchlässige Glieder (61; 71) läuft, um die Auftreffzeit der Lichtkomponente auf dem Medium (5) und die Auftreffzeit der anderen Lichtkomponente auf dem Medium (5) nach Maßgabe der aufzuzeichnenden Information zu ändern.

17. Verfahren zur Wiedergabe von Information, die auf einem Aufzeichnungsmedium aufgezeichnet ist, welches sich zum vorübergehenden oder dauerhaften Loch-Einbrennen eignet, umfassend die Schritte:

- Aufstrahlen eines Wiedergabe-Anregungslichts und eines Sondenlichts auf dieselbe Stelle auf dem Medium,
- relatives Verzögern des Sondenlichts um einen ausgewählten Betrag in Bezug auf das Wiedergabe-Anregungslicht,
- Interagieren-Lassen des Sondenlichts mit angeregtem Photonenecholicht, welches von dem Medium durch das Aufstrahlen des Wiedergabe-Anregungslichts emittiert wird,
- Umwandeln des synthetisierten Lichts, welches sich aus der Interaktion des Sondenlichts mit dem angeregten Photonenecholicht ergibt, in ein elektrisches Signal,

gekennzeichnet durch
das Anlegen einer ausgewählten Gleichspannung oder eines ausgewählten magnetischen Feldes an das Medium, wenn das Wiedergabe-Anregungslicht und das Sondenlicht auf das Medium aufgestrahlt werden.

18. Vorrichtung zum Wiedergeben von Information, die auf einem Aufzeichnungsmedium (5) aufgezeichnet ist, welches sich zum dauerhaften oder vorübergehenden Loch-Einbrennen eignet, umfassend:

- eine Einrichtung (1, 2, 12, 13, 15) zum Aufstrahlen eines Wiedergabe-Anregungslichts auf das Medium (5),
- eine Einrichtung (1, 2, 11, 13) zum Aufstrahlen eines Sondenlichts auf das Medium (5),
- ein optisches System (4) zum Aufstrahlen des Wiedergabe-Anregungslichts und des Sondenlichts auf dieselbe Stelle des Mediums (5), so daß das Sondenlicht mit Photonenecholicht interagiert, welches bei Empfang von Wiedergabe-Anregungslicht an einem oder mehreren räumlichen Punkten erzeugt wird,
- eine Einrichtung (7; 61, 62, 63) zum relativen Verzögern des Sondenlichts um einen ausgewählten Betrag in Bezug auf das Wiedergabe-Anregungslicht,
- eine Einrichtung (9, 10, 16) zum Umwandeln eines synthetisierten Lichts, welches durch die Interaktion des Sondenlichts und des angeregten Echolichts erhalten wird, in ein elektrisches Signal,

gekennzeichnet durch
eine Einrichtung (20b, 21, 22, 23, 24, 25) zum Anlegen einer ausgewählten Gleichspannung oder eines ausgewählten magnetischen Feldes an das Medium (5), wenn das Wiedergabe-Anregungslicht und das Sondenlicht auf das Medium (5) aufgestrahlt werden.


## Revendications

1. Procédé de reproduction d'informations enregistrées sur un support d'enregistrement présentant une possibilité de destruction persistante ou transitoire de perforations, ledit procédé comprenant les étapes suivantes:

irradiation dudit support avec une lumière d'excitation de reproduction et une lumière sonde;
interaction de la lumière d'écho photonique stimulée émise par ledit support, due à ladite irradiation de ladite lumière d'excitation de reproduction avec ladite lumière sonde; et
conversion d'une lumière de synthèse de ladite; lumière d'écho photonique stimulée et de ladite lumière de sonde, qui ont interagi, en un signal électrique,

caractérisé par une modulation relative de la phase de ladite lumière d'excitation de reproduction ou de ladite lumière sonde.

2. Appareil pour reproduire des informations enregistrées sur un support d'enregistrement (5) présentant une possibilité de destruction persistante ou permanente de perforations, ledit appareil comprenant:

(a) des moyens (1, 2, 12, 13, 15) pour irradier une lumière d'excitation de reproduction vers ledit support (5);
(b) des moyens (1, 2, 11, 13) pour irradier une lumière sonde vers ledit support (5) ;
(c) un système optique (4) pour irradier ladite lumière d'excitation de reproduction et ladite lumière sonde vers le même emplacement sur ledit support (5), de telle sorte que ladite lumière sonde interagit avec la lumière d'écho photonique générée lors de la réception de la lumière d'excitation de reproduction en un ou plusieurs points de l'espace;

(d) des moyens (7; 61, 62, 63) pour retarder relativement ladite lumiière sonde d'une quantité sélectionnée par rapport à ladite lumière d'excitation de reproduction;

(e) des moyens (9, 10, 16) pour convertir une lumière de synthèse obtenue par l'interaction de ladite lumière d'écho photonique stimulée et de ladite lumière sonde;

caractérisé par

(f) un moyen (6) de modulation de phase pour moduler la phase de ladite lumière d'excitation de reproduction ou de ladite lumière sonde.

3. Procédé d'enregistrement d'informations sur un support d'enregistrement présentant une possibilité de destruction persistante ou transitoire de perforations, ledit procédé comprenant les étapes suivantes:

irradiation d'une lumière d'excitation d'enregistrement et d'une lumière de données vers le même emplacement sur ledit support; et
application d'une tension continue sélectionnée ou d'un champ magnétique sélectionné lorsque ladite lumière d'excitation d'enregistrement et ladite lumière de données sont irradiées vers ledit support,

caractérisé par un retard relatif de ladite lumière de données d'une quantité sélectionnée par rapport à ladite lumière d'excitation.

4. Procédé selon la revendication 3, dans lequel, au cours de ladite étape d'application, les niveaux de ladite tension continue ou dudit champ magnétique appliqué audit support, à l'instant auquel ladite lumière d'excitation d'enregistrement est irradiée et à l'instant auquel ladite lumière de données est irradiée, sont sensiblement les mêmes.

5. Procédé selon la revendication 3, dans lequel le niveau de ladite tension continue ou dudit champ magnétique appliqué audit support, est modifié lorsque deux lumières de données différentes ou davantage sont irradiées au même emplacement sur ledit support.

6. Appareil pour enregistrer des informations sur un support d'enregistrement présentant une possibilité de destruction persistante ou transitoire de perforations, ledit appareil comprenant:

(a) des moyens (1, 2, 12, 13, 15) pour irradier une lumière d'excitation d'enregistrement vers ledit support (5);
(b) des moyens (1, 2, 11, 13) pour irradier une lumière de données vers ledit support (5);
(c) un système optique (4) pour irradier ladite lumière d'excitation d'enregistrement et ladite lumière de données vers le même emplacement sur ledit support (5); et
(d) des moyens (20b, 21, 22, 23, 24, 25) pour appliquer une tension continue ou un champ magnétique sélectionné audit support (5), lorsque ladite lumière d'excitation d'enregistrement et ladite lumière de données sont irradiées vers ledit support (5),

caractérisé par des moyens (7; 61, 62, 63) pour retarder relativement ladite lumière de données d'une quantité sélectionnée par rapport à ladite lumière d'excitation d'enregistrement.

7. Appareil selon la revendication 6, dans lequel lesdits moyens d'application (20b, 21, 22, 23, 24, 25) rendent sensiblement identiques les niveaux de ladite tension continue ou dudit champ magnétique appliqué audit support (5) à l'instant auquel ladite lumière d'excitation d'enregistrement est irradiée et à l'instant auquel ladite lumière sonde est irradiée.

8. Appareil selon la revendication 6, dans lequel lesdits moyens d'application (20b, 21, 22, 23, 24, 25) modifient le niveau de ladite tension continue ou dudit champ magnétique appliqué audit support (5) lorsque deux lumières de données ou davantage sont irradiées vers le même emplacement sur ledit support.

9. Procédé selon la revendication 1, comprenant en outre l'étape suivante:
application audit support d'une tension continue sélectionnée ou d'un champ magnétique sélectionné, lorsque ladite lumière d'excitation de reproduction et ladite lumière sonde sont irradiées vers ledit support.

**10.** Procédé selon la revendication 9, dans lequel, au cours de ladite étape, les niveaux de ladite tension continue ou dudit champ magnétique appliqué audit support à l'instant auquel ladite lumière d'excitation de reproduction est irradiée et à l'instant auquel ladite, lumière sonde est irradiée, sont sensiblement les mêmes.

**11.** Procédé selon la revendication 9, comprenant une étape au cours de laquelle le niveau de ladite tension continue ou dudit champ magnétique appliqué audit support, est modifié.

**12.** Appareil selon la revendication 2, comprenant en outre:
des moyens d'application (20b, 21, 22, 23, 24, 25) pour appliquer une tension continue sélectionnée ou un champ magnétique sélectionné audit support (5) lorsque ladite lumière d'excitation de reproduction et ladite lumière sonde sont irradiées vers ledit support (5).

**13.** Appareil selon la revendication 12, dans lequel lesdits moyens d'application (20b, 21, 22, 23, 24, 25) rendent sensiblement égaux les niveaux de ladite tension continue ou dudit champ magnétique appliqué audit support (5) à l'instant auquel ladite lumière d'excitation de reproduction est irradiée et à l'instant auquel ladite lumière sonde est irradiée.

**14.** Appareil selon la revendication 12, dans lequel lesdits moyens d'application (20b, 21, 22, 23, 24, 25) modifient le niveau de ladite tension continue ou dudit champ magnétique appliqué audit support (5).

**15.** Procédé selon la revendication 3, comprenant en outre les étapes suivantes:

préparation d'une source de lumière générant de la lumière incohérente;
division de ladite lumière incohérente en provenance de ladite source de lumière en composantes de ladite lumière d'excitation d'enregistrement et de ladite lumière de données;
préparation d'une pluralité d'éléments perméables à la lumière; et
autorisation de laisser passer l'une ou l'autre desdites composantes de lumière à travers deux éléments perméables à la lumière ou davantage, afin de modifier l'instant d'incidence de ladite composante de lumière sur ledit support et l'instant d'incidence de l'autre composante de lumière sur ledit support en fonction de l'information à enregistrer.

**16.** Appareil selon la revendication 6, comprenant en outre:

une source de lumière (1) pour générer de la lumière incohérente;
un moyen (2) pour diviser ladite lumière incohérente appliquée par ladite source de lumière en composantes de ladite lumière d'excitation d'enregistrement et de ladite lumière de données;
une pluralité d'éléments (71, 61) perméables à la lumière; et
des moyens (7; 62, 63) pour permettre à l'une ou l'autre desdites deux composantes de lumière de passer à travers deux éléments (61; 71) perméables à la lumière ou davantage, afin de modifier l'instant d'incidence de ladite composante de lumière sur ledit support (5) et l'instant d'incidence de l'autre composante de lumière sur ledit support (5) en fonction de l'information à enregistrer.

**17.** Procédé de reproduction d'informations enregistrées sur un support d'enregistrement présentant une possibilité de destruction transitoire ou persistante de perforations, ledit procédé comprenant les étapes suivantes:

irradiation d'une lumière d'excitation de reproduction et d'une lumière sonde vers le même emplacement sur ledit support;
retard relatif de ladite lumière sonde d'une quantité sélectionnée par rapport à ladite lumière d'excitation de reproduction;
interaction de ladite lumière sonde avec une lumière d'écho photonique stimulée émise par ledit support, due à l'irradiation par ladite lumière d'excitation de reproduction;
conversion d'une lumière de synthèse, résultant de l'interaction de ladite lumière sonde et de ladite lumière d'écho stimulée photonique, en un signal électrique,

caractérisé par l'application d'une tension continue sélectionnée ou d'un champ magnétique sélectionné audit support lorsque ladite lumière d'excitation de reproduction et ladite lumière sonde sont irradiées sur ledit support.

**18.** Appareil pour reproduire des informations enregistrées sur un support d'enregistrement (5) présentant une possibilité de destruction persistante ou transitoire de perforations, ledit appareil comprenant:

des moyens (1, 2, 12, 13, 15) pour irradier une lumière d'excitation de reproduction sur ledit support (5);

des moyens (1, 2, 11, 13) pour irradier une lumière sonde vers ledit support (5);

un système optique (4) pour irradier ladite lumière d'excitation de reproduction et ladite lumière sonde vers le même emplacement sur ledit support (5), de telle sorte que ladite lumière sonde interagit avec la lumière d'écho photonique générée lors de la réception de la lumière d'excitation de reproduction en un ou plusieurs points de l'espace;

des moyens (7; 61, 62, 63) pour retarder relativement ladite lumière sonde d'une quantité sélectionnée par rapport à ladite lumière d'excitation de reproduction;

des moyens (9, 10, 16) pour convertir la lumière de synthèse obtenue par l'interaction de ladite lumière sonde et de ladite lumière d'écho stimulée en un signal électrique, caractérisé par

des moyens (20b, 21, 22, 23, 24, 25) pour applique une tension continue sélectionnée ou un champ magnétique sélectionné audit support (5) lorsque ladite lumière d'excitation de reproduction et ladite lumière sonde sont irradiées vers ledit support (5).

# FIG. 1

RECORD EXCITATION LIGHT
OR
REPRODUCING EXCITATION
LIGHT

DATA LIGHT OR
PROBE LIGHT

MICRO COMPUTER

DR

OUTPUT

## FIG. 2

## FIG. 4

FIG. 3A

HETERODYNE ECHO INTENSITY

LIGHT DELAY TIME (psec)

5.0

5.5

FIG. 3B

HETERODYNE ECHO INTENSITY

LIGHT DELAY TIME (psec)

5.0

5.5

EP 0 425 278 B1

## FIG. 5

## FIG. 6

EP 0 425 278 B1

# FIG. 7

τ = 100psec

τ = 101psec

ECHO
LIGHT
INTENSITY

τ = 102psec

0          10          20          V

# FIG. 8

# FIG. 9